# FASCICULE DE BREVET EUROPEEN

(11) **EP 1 068 605 B1**
(45) Date de publication et mention de la délivrance du brevet: **12.12.2001**
(21) Numéro de dépôt: 99907665.6
(22) Date de dépôt: 08.03.1999
(51) Int. Cl.: G09B 23/32, G09B 23/28

(54) **STRUCTURE ANATOMIQUE POUR LA FORMATION DE CHIRURGIENS A LA CHIRURGIE ORTHOPEDIQUE, NOTAMMENT RACHIDIENNE**
ANATOMISCHE STRUKTUR ZUR AUSBILDUNG VON CHIRURGEN FÜR DIE ORTHOPÄDISCHE CHIRURGIE,INSBESONDERE WIRBELSÄULENCHIRURGIE
ANATOMICAL STRUCTURE FOR TRAINING SURGEONS IN ORTHOPAEDIC SURGERY, IN PARTICULAR BACKBONE SURGERY

(30) Priorité: 30.03.1998 FR 9803924
(43) Date de publication de la demande: 17.01.2001
(73) Titulaire: EUROSURGICAL, 62217 Beaurains (FR)
(72) Inventeur: VIART, Guy, F-62128 Saint Léger (FR)
(74) Mandataire: Schmitt, John
(86) Numéro de dépôt international: FR9900516
(87) Numéro de publication internationale: WO9950808

(56) Documents cités:
- EP-A- 0 822 531
- WO-A-93/16664
- US-A- 4 200 995
- US-A- 5 672 059
- DATABASE WPI Week 7545 Derwent Publications Ltd., London, GB; AN 75-m1516w XP002082926 & SU 452 341 A (OVCHINNIKOV N D) , 3 avril 1975

## Description

La présente invention a pour objet une structure anatomique pour la formation de chirurgiens à la chirurgie orthopédique, notamment rachidienne.

Jusqu'à présent, les chirurgiens sont formés soit directement pendant les interventions chirurgicales, soit sur des cadavres, soit encore sur des modèles de formation particuliers.

Le premier type de formation présente l'inconvénient évident d'empêcher le chirurgien de répéter les gestes de l'intervention avant celle-ci. Par ailleurs, les cadavres sont de plus en plus difficiles à obtenir en raison des réglementations en vigueur, et en outre ne présentent pas nécessairement la pathologie recherchée. Les cadavres ne permettent pas non plus de reproduire certaines pathologies telles que les lordoses, en raison de leur rigidité. La qualité des cadavres peut aussi être très variable, mais surtout ne permet pas de reconstituer certains types de pathologie, sauf extrême hasard. De plus dans certains pays des interdits s'opposent à ce que les chirurgiens se forment sur cadavres, et ces derniers présentent aussi des risques de transmission de certaines maladies.

En effet, les dispositifs ou modèles de formation existants, constitués d'un support rigide évidé pour recevoir le segment rachidien, sont tout à fait insuffisants pour simuler un patient de manière satisfaisante.

On connaît d'après le document US 5672059 une structure anatomique pour la formation des chirurgiens aux techniques d'orthopédies chirurgicales.

Cette structure est constituée d'un élément vertébral et d'un élément reproduisant le sacrum qui sont réalisés dans un matériel synthétique.

La structure comprend entre chaque élément vertébral, un élément formant le disque intervertébral qui est réalisé dans un silicone ou un polyuréthane moulé.

La structure comporte également un tuyau simulant la moelle épinière.

On note que la structure anatomique décrite dans le brevet US 5672059 est susceptible de pouvoir reproduire une pluralité de distorsion anatomique du fait d'une tige fiietée souple qui traverse les éléments vertébraux, sacrum et disques intervertébraux pour venir coopérer dans la partie supérieure de la structure avec une rondelle plastique et un écrou.

La tige filetée souple permet d'incliner à volonté dans toutes les directions possibles la structure anatomique et de la maintenir dans cette position.

On constate que cette structure ne comporte pas d'éléments reproduisant les tissus mous entourant le rachis.

On connaît d'après le document SU 452341, un modèle utilisé pour des expérimentations comportant des éléments articulaires, des éléments élastiques simulant les disques intervertébraux, et un câble flexible reliant les éléments articulaires entre eux.

Le modèle d'expérimentation est recouvert d'une enveloppe réalisée en matière plastique simulant les tissus mous du corps humain.

L'invention a donc pour but de proposer une structure anatomique pour la formation de chirurgiens, notamment à la chirurgie rachidienne, simulant de manière satisfaisante des pathologies déterminées en reproduisant la partie considérée du corps humain, et qui en outre soit libérée de toute contrainte réglementaire.

Conformément à l'invention, la structure anatomique comprend un bloc souple de mousse et un segment osseux affecté d'une pathologie donnée, noyé dans le bloc de mousse, ledit segment osseux étant réalisé en un matériaux reproduisant un os spongieux.

Avantageusement, le bloc souple est réalisé en polyuréthanne simulant les tissus qui entourent le segment rachidien et que le chirurgien doit inciser pour parvenir à celui-ci.

Ce matériau polyuréthanne peut être réalisé de manière plus ou moins souple ou rigide, et constituer alors le segment vertébral avec une dureté appropriée, permettant de reproduire un os spongieux.

La structure anatomique selon l'invention constitue ainsi un outil de formation particulièrement efficace, permettant de simuler des gestes chirurgicaux précis : visée pédiculaire, mise en place de matériel d'ostéosynthèse par voie postérieure ou antérieure, de cages intersomatiques, réduction de déformations (lordose, cyphose, scoliose...), laminectomie, dissectomie, neurolyse, spondylolistésis, corporectomie etc.

Les éléments anatomiques constitués par le segment rachidien, incorporant le cas échéant le sacrum, ainsi que le matériau souple dans lequel ce segment est noyé, permettent de reproduire pour le chirurgien des sensations opératoires proches de la réalité lors des manipulations.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en élévation à échelle réduite d'un segment rachidien comprenant des vertèbres lombaires et le sacrum, affecté d'un spondylolistésis.

La figure 2 est une vue en perspective d'une forme de réalisation à échelle réduite de la structure anatomique selon l'invention, dans laquelle a été ménagée une ouverture d'accès à un segment rachidien, pouvant être celui de la figure 1.

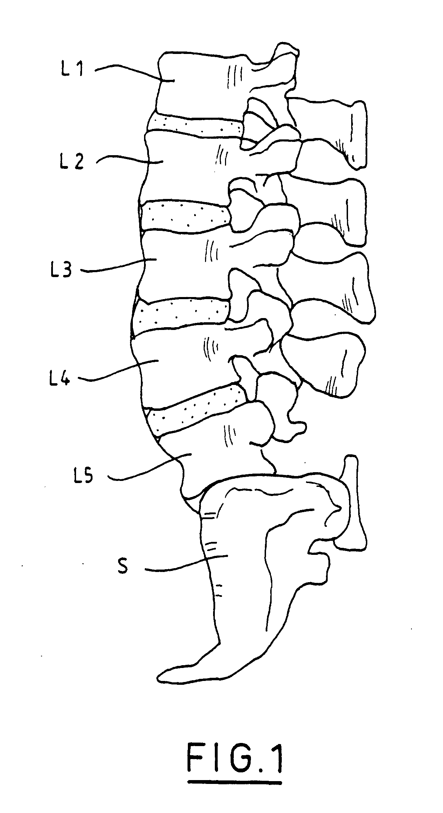

Le segment rachidien représenté à titre d'exemple sur la figure 1 comprend les cinq vertèbres lombaires L1-L5 et le sacrum S, la vertèbre L5 étant affectée d'un spondylolisthésis.

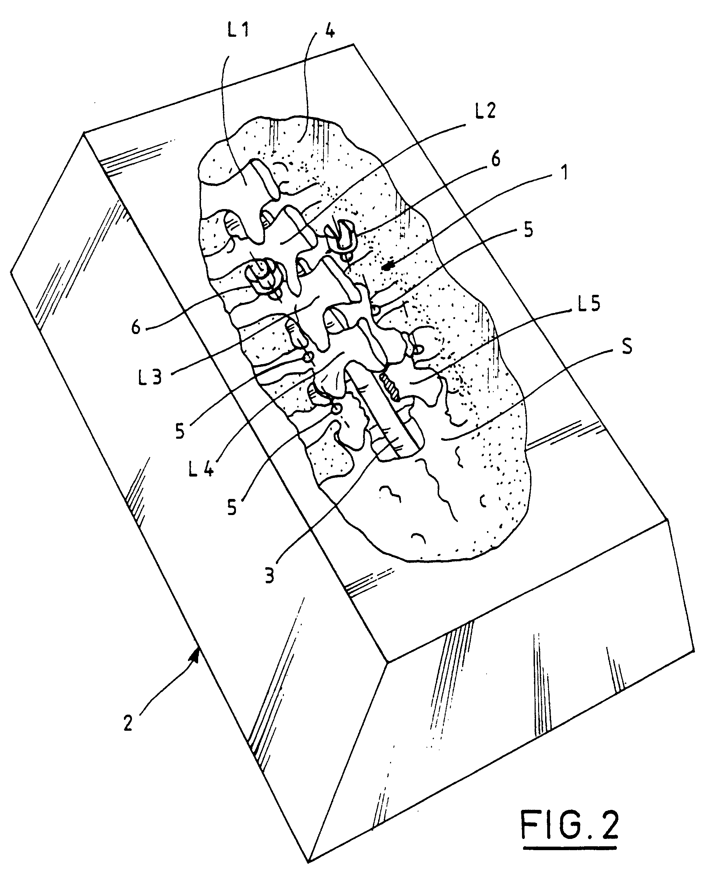

La structure anatomique de la figure 2 , destinée à la formation de chirurgiens orthopédistes du rachis, comprend le segment vertébral 1, et un bloc souple 2 de mousse de forme quelconque, dans lequel est noyé le segment rachidien 1.

Les vertèbres L1-L5 et le sacrum S du segment 1 sont réalisés en un matériau reproduisant l'os spongieux, tandis que le matériau souple du bloc 2 présente une consistance reproduisant les tissus mous entourant le rachis. A titre d'exemple non limitatif, le matériau constituant le bloc souple 2 peut être une mousse polyuréthanne, ce même matériau pouvant être utilisé, avec une dureté appropriée, pour réaliser les vertèbres L1-L5 et le sacrum S. Avantageusement, le segment vertébral 1 peut être enrobé au moins partiellement d'une couche de matériau reproduisant l'os cortical, ce matériau étant par exemple une résine appropriée ayant la dureté voulue pour simuler l'os cortical.

Cette résine peut être un polyuréthanne dense, dur, tandis que l'os spongieux peut être constitué d'un polyuréthanne moins dur.

Le segment rachidien 1 comporte un emplacement correspondant au canal médullaire, dans lequel est logée une membrane tubulaire souple 3 simulant la moelle épinière. La membrane tubulaire 3 est de préférence remplie d'un liquide sous pression, qui peut être coloré Ainsi du fait de sa fragilité, cette membrane 3 peut, en cas de fausse manoeuvre lors de la formation (section accidentelle par l'élève chirurgien de la moelle épinière) simuler une brèche durale provoquant l'échappement de la membrane 3 du liquide coloré sous pression.

Des racines nerveuses non représentées peuvent aussi être placées dans des trous de conjugaison.

Sur la figure 2, la face supérieure du bloc 2 présente une excavation 4 s'étendant jusqu'au segment rachidien 1 et dégageant celui-ci, de manière similaire à l'incision pratiquée au bistouri par le chirurgien pour mettre à nu le segment rachidien sur lequel il doit intervenir.

La fabrication de la structure anatomique illustrée à la figure 2 est exécutée de la manière suivante : le segment rachidien avec sa membrane tubulaire 3 remplie d'un liquide sous pression et ses racines nerveuses est disposé dans un moule non représenté, sur des plots positionneurs. Puis on remplit le moule d'une mousse telle que du polyuréthanne, afin de noyer l'ensemble et d'obtenir un bloc souple ayant la géométrie du volume intérieur du moule et à l'intérieur duquel est noyé le segment rachidien.

Pour simuler une intervention chirurgicale, le chirurgien découpe au bistouri la surface du bloc 2 jusqu'à ce que le segment rachidien 1 soit suffisamment dégagé. Le matériau enrobant le segment rachidien se travaille avec les instruments de chirurgie normaux, tels que bistouri, pince, pointe carrée pour le repérage des pédicules, curette ou foret pour le forage pédiculaire, ciseau à os, gouge.... Ce matériau simule de manière très satisfaisante l'approche et l'exposition du rachis.

La visée pédiculaire dans les vertèbres L1... reproduit des sensations proches de la réalité, et peut être réalisée avec toute technique adaptée, telle que curette ou moteur, visée droite ou convergente etc. selon le choix du chirurgien. La carapace de résine reproduisant la corticale osseuse, enrobant la masse d'os spongieux, permet de simuler la palpation de l'os cortical lors du forage pédiculaire, à l'issue duquel sont réalisés des trous 5 pour l'insertion ultérieure de vis pédiculaires dont deux 6 sont représentées à la figure 2. Ces vis 6 une fois mises en place sont complétées par des éléments d'une instrumentation d'ostéosynthèse rachidienne connus en soi et non représentés.

La souplesse de la mousse dans laquelle le segment rachidien 1 est inséré permet des mobilités des vertèbres, qui peuvent donc être mobilisées entre elles pour le repérage des facettes articulaires nécessaires à la visée pédiculaire. Ceci présente également l'avantage de permettre la correction des déformations ou la possibilité de lordoser plus ou moins le segment rachidien 1.

Le matériau constituant les vertèbres L1... et le sacrum S est travaillé avec des outils classiques de chirurgie orthopédique, son comportement étant similaire à celui de l'os.

La carapace de matériau dur enveloppant le matériau représentant l'os spongieux permet au chirurgien de palper également le mur cortical antérieur de la vertèbre, lorsque son outil de forage a entièrement traversé l'os spongieux. Par la résistance opposée par la corticale antérieure le chirurgien sait alors qu'il doit arrêter la pénétration de l'outil.

La membrane souple 3 simulant la moelle épinière peut être rétractée manuellement comme en situation réelle, afin d'exposer le disque intervertébral situé à cet endroit pour permettre une dissectomie avec les outils classiques de chirurgie. L'opération de dissectomie est aisément réalisée avec des rongeurs à disque, grâce au matériau constituant le disque, qui peut être par exemple du polyuréthanne déchirable.

La laminectomie peut s'effectuer avec une scie motorisée ou une pince Kerrisson ; le recalibrage est effectué aux ciseaux à frapper, les fragments étant retirés à la pince de façon similaire à la chirurgie réelle.

Une préparation de purée simule la greffe.

Bien entendu le mode de réalisation illustré à la figure 2 n'est donné qu'à titre d'exemple, le segment rachidien et sa pathologie pouvant être quelconques, et le matériau souple pouvant avoir une géométrie extérieure quelconque. La structure anatomique selon l'invention constitue un outil de simulation permettant de recréer des sensations et des approches chirurgicales, et donc une formation efficace et aisée sans les contraintes et difficultés rencontrées avec les cadavres. La formation des chirurgiens peut ainsi se faire de manière beaucoup plus aisée et à des coûts abordables, sans la moindre contrainte réglementaire ou culturelle imposée par l'utilisation de cadavres.

L'invention est susceptible de variantes d'exécution. Ainsi le polyuréthanne peut être remplacé par tout autre matériau possédant des caractéristiques similaires. De même le segment rachidien pourrait être remplacé par un autre segment osseux du squelette se prêtant à des simulations d'intervention chirurgicale.

## Revendications

1. Structure anatomique pour la formation de chirurgiens à la chirurgie orthopédique, notamment rachidienne comportant un segment osseux (1) susceptible de pouvoir reproduire une pluralité de distorsions anatomiques, **caractérisée en ce qu'**elle comprend un bloc souple (2) de mousse et un segment osseux (1) affecté d'une pathologie donnée, noyé dans le bloc, ledit segment osseux (1) étant réalisé en un matériau reproduisant un os spongieux.

2. Structure selon la revendication 1, **caractérisée en ce que** le segment osseux et un segment vertébral (1) qui est enrobé au moins partiellement d'une couche de matériau reproduisant un os cortical.

3. Structure selon la revendication 2, **caractérisée en ce que** le segment vertébral (1) comporte un emplacement correspondant à un canal médullaire dans lequel est logée une membrane tubulaire souple (3) simulant la moelle épinière, cette membrane étant remplie d'un liquide sous pression.

4. Structure selon la revendication 1, **caractérisée en ce que** le bloc souple (2) est en polyuréthanne.

5. Structure selon la revendication 2, **caractérisée en ce que** la couche de matériau est une résine, tel que du polyuréthanne.

## Claims

1. Anatomical structure for training surgeons in orthopaedic surgery, particularly of the spine, comprising a bone segment (1) which is able to reproduce a plurality of anatomical distortions, **characterized in that** it comprises a flexible block (2) of foam and a bone segment (1) affected by a given pathology and embedded in the block, said bone segment (1) being made of a material reproducing a spongy bone.

2. Structure according to Claim 1, **characterized in that** the bone segment is a vertebral segment (1) which is coated at least partially with a layer of material reproducing a cortical bone.

3. Structure according to Claim 2, **characterized in that** the vertebral segment (1) includes a location corresponding to a medullary channel in which a flexible tubular membrane (3) is lodged which simulates the spinal cord, this membrane being filled with a pressurized liquid.

4. Structure according to Claim 1, **characterized in that** the flexible block (2) is made of polyurethane.

5. Structure according to Claim 2, **characterized in that** the layer of material is a resin, such as polyurethane.

## Patentansprüche

1. Anatomische Struktur für die Ausbildung von Chirurgen in orthopädischer Chirurgie und insbesondere in der Chirurgie der Wirbelsäule, bestehend aus einem Knochensegment (1), das dazu geeignet ist, eine Vielzahl von anatomischen Verzerrungen und Verdrehungen nachzubilden;
**dadurch gekennzeichnet, dass** sie einen biegsamen Block (2) aus Schaumstoff und ein Knochensegment (1), das durch eine bestimmten Krankheit in Mitleidenschaft gezogen und in dem Block eingebettet ist, umfasst, wobei das besagte Knochensegment (1) aus einem Material hergestellt wird, das einen spongiösen Knochen nachbildet.

2. Struktur nach Anspruch 1,
**dadurch gekennzeichnet, dass** das Knochensegment und ein Wirbelsegment (1), das wenigstens teilweise von einer Materialschicht umgeben ist, einen in der Rinde liegenden Knochen nachbilden.

3. Struktur nach Anspruch 2,
**dadurch gekennzeichnet, dass** das Wirbelsegment (1) eine Stelle enthält, die einem Rückenmarkskanal entspricht, wobei in diesem Rückenmarkskanal eine biegsame röhrenförmige Membran (3) untergebracht ist, die das Rückenmark nachbildet, und diese Membran mit einer unter Druck stehenden Flüssigkeit gefüllt ist.

4. Struktur nach Anspruch 1,
**dadurch gekennzeichnet, dass** der biegsame Block (2) aus Polyurethan besteht.

5. Struktur nach Anspruch 2,
**dadurch gekennzeichnet, dass** die Materialschicht aus einem Harz wie zum Beispiel Polyurethan besteht.
